# EUROPEAN PATENT APPLICATION

(11) **EP 2 305 952 A2**
(43) Date of publication of application: **06.04.2011**
(21) Application number: 10172758.4
(22) Date of filing: 13.08.2010
(51) Int. Cl.: F01D 5/06, F01D 5/28, B23K 9/00

(54) **Steam turbine rotor and steam turbine using the same**

(30) Priority: 28.09.2009 JP 2009221814
(71) Applicant: Hitachi Ltd., Tokyo 100-8280 (JP)
(72) Inventor: Imano, Shinya, Tokyo 100-8220 (JP); Doi, Hiroyuki, Tokyo 100-8220 (JP); Sato, Jun, Tokyo 100-8220 (JP)
(74) Representative: MERH-IP Matias Erny Reichl Hoffmann

(57) **Abstract**

To provide a steam turbine rotor and a steam turbine which are highly reliable.

The steam turbine rotor is **characterized in that** a forged material B having a hollow structure is joined to a forged material A of a Ni group super-alloy by welding, and weld back waves on an inner surface are removed, and the inner surface is smoothed, and a forging material C and a forging material B are joined to each other with a bolt.

## Description

### BACKGROUND OF THE INVENTION

### (Field of the Invention)

The present invention relates to a steam turbine rotor and a steam turbine using the same.

### (Description of the Related Art)

To improve the power generation efficiency of a steam turbine power generation plant, a rise of the main steam temperature is valid. In correspondence with the rise of the main steam temperature, the temperature of a high-temperature part increases, so that a heat resistant material of a higher resistant temperature is necessary.

In the steam turbine, a steel material such as 12-Cr steel has been used thus far, though by use of a Ni group super-alloy for a high-temperature portion of the turbine or boiler, the research and development of a high efficiency steam turbine with the main steam temperature raised greatly are in progress.

The Ni group super-alloy is excellent in the high-temperature intensity, and even a forging material withstands steam at 700°C or higher, though a problem arises that the productivity of a large forged material is low. The steam turbine rotor is generally often more than 10 tons in weight, though the Ni group super-alloy, even in a type of steel excellent in productivity, under the restriction of the equipment, has a weight limit of about 10 tons.

In the high-pressure rotor of the steam turbine, the temperature on the entrance side is close to the main steam temperature and in a steam turbine of the 700°C class, it is 700°C. The temperature goes down as approaching the exit side and the temperature at the exit portion is 400°C or lower.

Therefore, an attempt is made to manufacture a rotor with a weight greatly higher than 10 tons by using conventional ferrite steel for a portion at a temperature of 600°C or lower, using a Ni group super-alloy for a portion at a temperature higher than 600°C, and joining them by welding.

However, after welding, the back waves internally remaining cannot be removed, thus a problem arises that a state occurs where an internal defect remains. Further, the Ni group super-alloy is bad in the ultrasonic wave permeability and in a welding metal composed of coarse particles, the ultrasonic wave permeability is deteriorated even more.

To join the Ni group super-alloy and ferrite steel, a welding metal of the Ni group super-alloy is generally used, so that in the aforementioned weld type rotor, the internal defect detection limit is lowered, thus causing a staying of the back waves and a reduction in reliability. In addition to the weld joint, a rotor of the joint structure with a bolt is well-known, though strong tension is applied to the bolt portion, so that if the bolt portion rises in temperature, the bolt is subject to creep deformation and is loosened, so a bolt joint portion having a temperature limit and insurance reliability at 500°C or higher is difficult.

### (Document of Prior Art)

Patent Document
Patent Document 1: Japanese Patent Application Laid-open No. 2005-121023

### SUMMARY OF THE INVENTION

An object of the present invention is to provide a steam turbine rotor and a steam turbine that are highly reliable.

The solving means is as indicated below. To a forged material A of a Ni group super-alloy at a resistant temperature of 700°C or higher, a forged material B having a hollow structure is joined by welding, and then the weld back waves on the inner surface are removed by machining to smooth the inner surface, and a forged material C and the forged material B are joined with a bolt. Before joining the forged material C and forged material B with a bolt, an ultrasonic inspection is executed from the inner surface where the back waves are removed, thus a minute defect that cannot be detected externally can be detected, and in addition to the effect of the removal of the back waves, the reliability can be improved.

The forged material A is a Ni group super-alloy at a resistant temperature of 700°C or higher, though it may be a NiFe group super-alloy including Fe. The forged material B, from the viewpoint of cost, when the temperature of the welded portion is 600°C or lower, is preferably ferrite steel, though if a Ni group super-alloy is used for the forged material B, even when the temperature of the welded portion is high, the reliability can be ensured. The forged material C may be inexpensive ferrite steel that can be used at 500°C at its maximum, though the use of CrMo V steel that is resistant to abrasion with a bearing is valid. When using 12-Cr steel as a forging material, at the shaft portion in contact with the bearing, CrMo V steel must be built up.

According to the present invention, there are no weld back waves at all on the inner surface, and the reliability can be improved by the inspection at the time of manufacture, though by removing the bolt at the time of the periodic inspection, the inner surface of the welded portion can be re-inspected, and the inspection at the time of the periodic inspection is executed, thus long term reliability can be ensured even further.

The back waves on the inner surface as a starting point of cracking can be smoothed by machining and the welded portion can be subject to X-ray inspection and ultrasonic inspection from the inner surface. The bolt joint portion can be reduced to 500°C or lower by adjusting the length of the forging material B. By doing this, a rotor having high reliability can be provided. Further, the welded portion is decomposed at the time of the periodic inspection and the inner surface of the welded portion can be inspected and repaired.

According to the present invention, a steam turbine rotor and a steam turbine that are highly reliable can be realized.

### BRIEF DESCRIPTION OF THE DRAWINGS

Fig. 1 is a configuration example of the steam turbine plant that is an embodiment of the present invention,
Fig. 2-1 is a diagram showing an example of the constitution of the steam turbine rotor that is a comparison example,
Fig. 2-2 is a diagram showing another example of the constitution of the steam turbine rotor that is a comparison example,

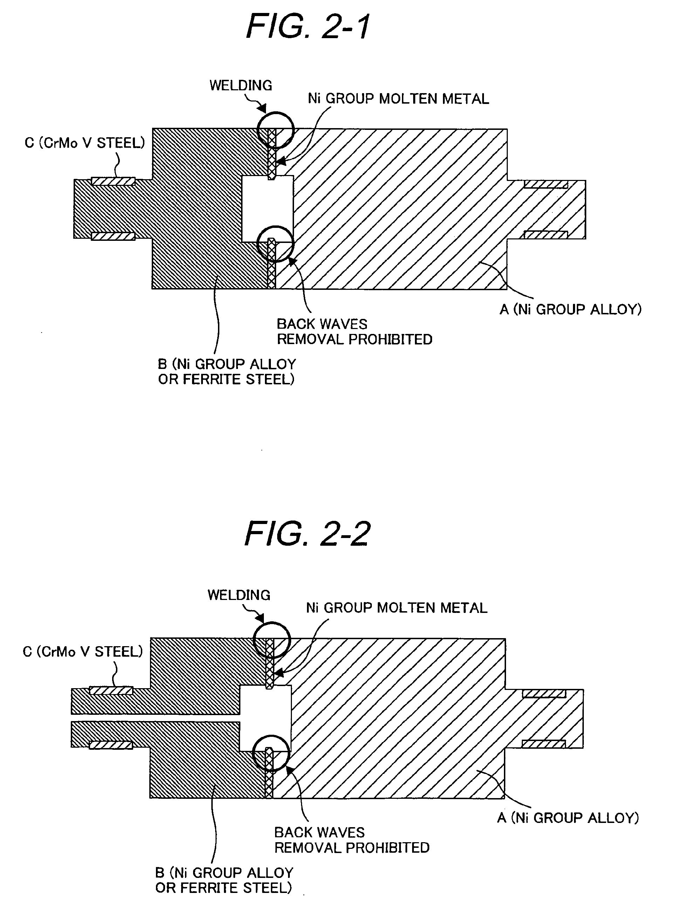

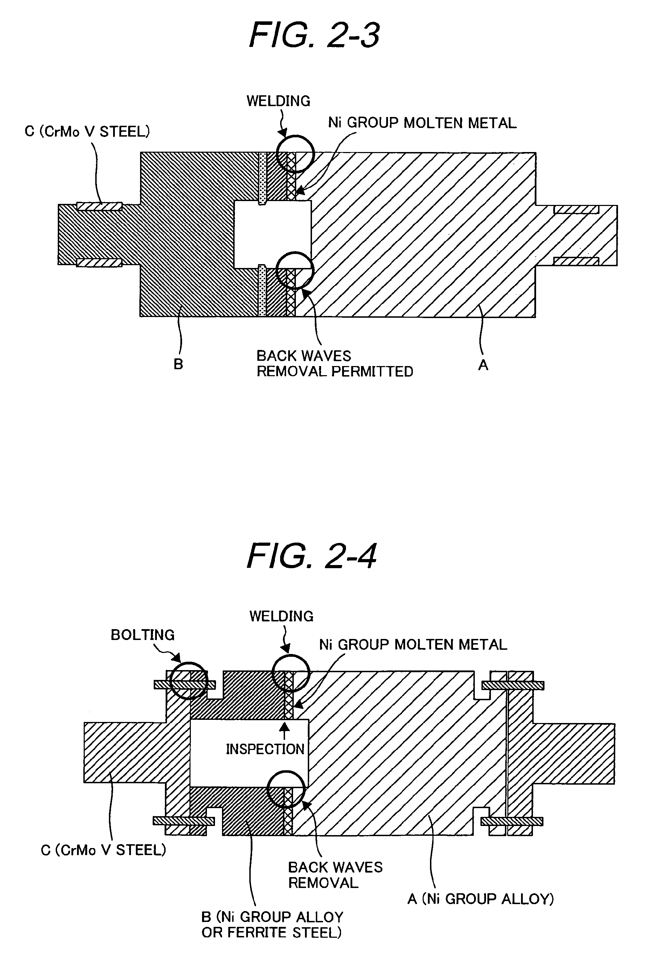

Fig. 2-3 is a diagram showing still another example of the constitution of the steam turbine rotor that is a comparison example,
Fig. 2-4 is a configuration example showing a further example of the constitution of the steam turbine rotor as a comparison example of the steam turbine rotor applied to the steam turbine (the back waves remaining internally after the forging material A and forging material B are welded are not removed) and the constitution of the steam turbine rotor as an embodiment of the present invention (the back waves remaining internally after the forging material A and forging material B are welded are removed), and

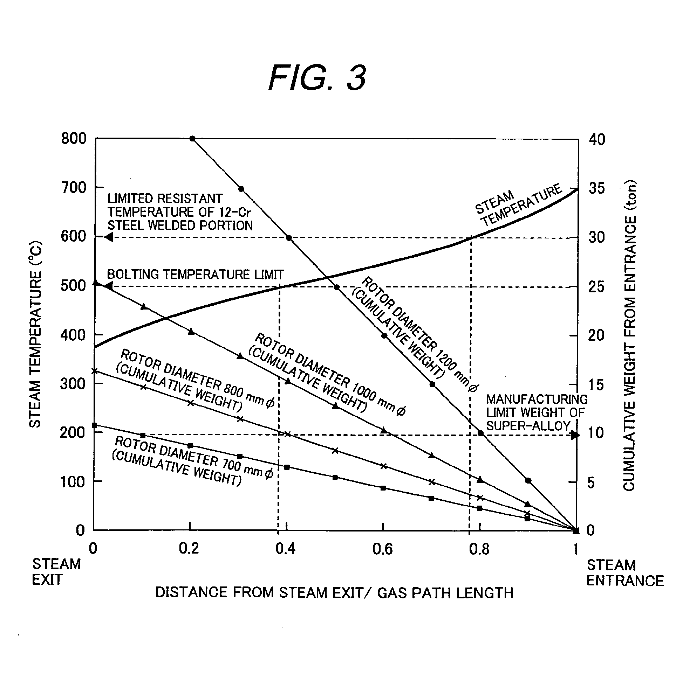

Fig. 3 is a graph showing the steam temperature at which the steam turbine rotor is exposed.

### DETAILED DESCRIPTION OF THE INVENTION

Hereinafter, the embodiment of the steam turbine rotor of the present invention will be explained.

### [Embodiment]

Table 1 shows the chemical components of the forging materials of the steam turbine rotor of the present invention that are used in the embodiment.

**Table 1**

| Chemical components of forging materials (mass %) | | | | | | | | | | | |
|---|---|---|---|---|---|---|---|---|---|---|---|
| Material name | C | Ni | Mo | Cr | Co | Al | Ti | W | Nb | v | |
| FX700 | 0.03 | 42 | 16 | 0 | 0 | 1.3 | 1.7 | 0 | 2.0 | 0 | Bal. Fe |
| A263 | 0.03 | Bal. | 20 | 6 | 20 | 0.4 | 1.7 | 0 | 0 | 0 | |
| A141 | 0.03 | Bal. | 19.0 | 10.2 | 0 | 1.58 | 1.38 | 0 | 0 | 0 | |
| FE01 | 0.17 | 0.2 | 1.0 | 1.0 | 0 | 0 | 0 | 0 | 0 | 0.2 | Bal. Fe |
| FE02 | 0.16 | 0.5 | 11.2 | 0.8 | 0 | 0 | 0 | 0 | 0.1 | 0.2 | Bal. Fe |

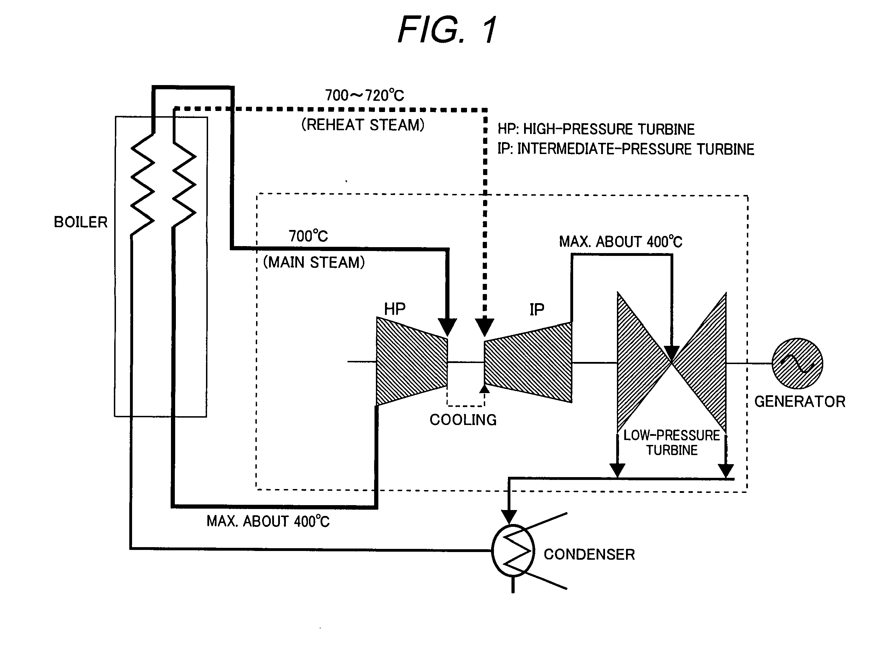

Fig. 1 shows a configuration example of the steam turbine plant to which the steam turbine rotor that is an embodiment of the present invention is applied. The main steam temperature is 700°C and the main steam works in the high-pressure turbine (HP) and then is reduced in temperature to about 400°C. However, the steam is returned again to the boiler, is re-heated up to 720°C, and becomes reheat steam.

The pressure of the reheat steam is lower than that of the main steam, so that the burden imposed on the pressure resistant member of the steam turbine is almost the same as that imposed on the main steam side lower in temperature by 20°C. The reheat steam enters the intermediate-pressure turbine, works there, then is lowered in temperature to about 400°C, works in the low-pressure turbine, then is lowered in temperature to room temperature, and enters the steam condenser.

The steam turbine rotor to which the present invention is applied with fixed blades working upon receipt of steam is a shaft for driving the generator and a member exposed in a severest environment in the turbine.

In the steam turbine plant shown in Fig. 1, the present invention can be applied to the rotors of the high-pressure turbine and intermediate-pressure turbine, though hereinafter, an inspection example when the present invention is applied to the high-pressure turbine rotor will be indicated.

The constitution examples of the rotor subject to the comparison inspection are shown in Table 2.

**Table 2**

| Constitution example of high-pressure turbine rotor of 700°C class | | | | | | | |
|---|---|---|---|---|---|---|---|
| | Rotor | Rotor diameter (mm) | Designed temperature (°C) | | Material | | |
| | | | Welded portion | Bolt | A | B | C |
| Comparison 1 | C1 | 1200 | 600 | - | FX700 | A141 | |
| Comparison 2 | C2 | 1000 | 520 | - | FX700 | FE02 | |
| Comparison 3 | C3 | 800 | 550 | - | A263 | FE02 | |
| Comparison 4 | INV | 700 | - | 400 | A263 | None | FE01 |
| Invention 1 | INV | 800 | 550 | 380 | A263 | FE02 | FE01 |
| Invention 2 | INV | 1000 | 520 | 380 | FX700 | FE02 | FE01 |
| Invention 3 | INV | 1400 | 620 | 500 | FX700 | A141 | FE01 |
| Invention 4 | INV | 700 | 500 | 380 | A263 | FE02 | FE01 |

Figs. 2-1 to 2-4 show the characteristics of the steam turbine rotors given in Table 2.

Comparison 1 uses a conventional weld type rotor and the characteristics thereof are shown in Fig. 2-1 as an example of the steam turbine rotor of the comparison example. In this case, after welding, the inside of the rotor is closed, so that the removal of the back waves and the ultrasonic inspection from the inside are impossible. The welded portion of a supper-alloy is bad in the ultrasonic wave permeability, so that it is difficult to detect weld defects on the inner surface from the outside. Further, the back waves remain, so that there are possibilities that this portion may be a starting point of cracking and it is difficult to obtain high reliability.

Comparison 2 is another example of the steam turbine rotor of the comparison example having the characteristics shown in Fig. 2-2. In this case, the forging material B has a center hole formed, so that the inner surface of the welded portion can be observed through the center hole, thus if there is a remarkable defect, it can be detected, though it is difficult to execute the inspection using ultrasonic waves and remove the back waves.

Comparison 3 is still another example of the steam turbine rotor of the comparison example having the characteristics shown in Fig. 2-3. To the forging material A composed of a Ni group alloy, a ferrite steel ring which is the same material as that of the forging material B is welded with a welding metal of the Ni group alloy and then the ferrite steel ring and the forging material B of ferrite steel are welded with a welding metal of ferrite steel.

Before welding the ferrite steel ring and the ferrite steel, for the welded portion of the forging material A and the ferrite steel ring material, it is possible to remove the back waves and inspect it from the inner surface. However, for the welded portion of the ferrite steel ring and the forging material B, the back waves remain and an inspection from the inner surface is impossible.

The welding metal of ferrite steel, compared with the welding metal of a supper-alloy, has good ultrasonic wave permeability. Therefore, compared with Comparison 1 and Comparison 2, Comparison 3 is excellent in reliability, though the reliability of the ferrite steel welded portion where the back waves remain and the inspection from the inner surface cannot be executed cannot be ensured sufficiently. Further, after the forging material B is welded, the inspection of the inner surface is impossible, thus at the time of the periodic inspection, the inner surface cannot be inspected and the long term insurance of reliability becomes a problem.

Comparison 4 has the structure of the steam turbine rotor shown in Fig. 2-4, which is a structure that the forging material C is directly joined to the forging material A with a bolt, though after welding of the forging material A and forging material B, the back waves remaining internally may not be removed.

Fig. 3 shows graphs indicating the steam temperature at which the steam turbine rotor is exposed and the cumulative weight, that is, the change in the steam temperature from the exit of the rotor to the entrance thereof and the cumulative weight from the entrance to the exit.

In Comparison 4, the rotor diameter is 700 mmφ, so that the cumulative weight from the entrance to the exit is about 10 tons. In FX700, a forging material of the 10-ton class can be manufactured, so that the interval from the entrance to the exit can be manufactured by a monoblock. At both ends of the entrance and exit, the temperature is low, so that the shaft can be joined with a bolt.

However, when the rotor diameter becomes 800 mmφ, if the ratio of "distance from steam exit/gas path length" becomes 0.4 or less, the cumulative weight exceeds 10 tons, so that the entrance side from this portion must be joined to another forging material. Further, at the portion higher than 0.4, the steam temperature exceeds 500°C, so that the reliability of the bolt joint is low and joint by welding is necessary.

Invention 1 is an embodiment of the present invention and has the characteristic of the steam turbine rotor which is an embodiment of the present invention shown in Fig. 2-4, so that after welding of the forging material A and forging material B, the back waves remaining internally are removed.

The rotor diameter is 800 mm and the forging material A is A263. A263 is higher in intensity than FX700, thereby is suitable for welding with ferrite, though a forged material up to about 7 tons is a manufacturing limit, so that the portion at a steam temperature of 550°C is joined to the forging material B by welding.

The forging material B is 12-Cr steel (FE02). The interval from the portion at 550°C to the exit portion is composed of the forging material B and the portion at 400°C or lower is joined to the forging material C (FE01) with a bolt.

After the forging material A and the forging material B are joined with a welding material of a Ni group super-alloy, the back waves are removed and the ultrasonic inspection is executed from both the inner surface and outer surface. Thereafter, the forging material C is joined to the forging material B with a bolt, though even at the time of periodic inspection after use of the equipment, by removing the bolt, the inner surface can be inspected and repaired.

Invention 2 having a rotor diameter of 1000 mm, by use of FX700 capable of manufacturing a larger one, can structure a rotor similarly to Invention 1.

In Invention 3 having a rotor diameter of 1200 mm, under the restriction (10 tons) of the forging weight of the forging material A, the temperature at the welded portion becomes 600°C or higher.

Therefore, if the forging material B is set to ferrite steel, the reliability of the welded portion cannot be obtained, so that the forging material B is set to A141 which is a Ni group super-alloy. A141, since the coefficient of linear expansion is closer to ferrite steel than FX700, is suitable for bolt joint to ferrite steel. The forging material C is joined to the forging material B with a bolt, though A141 can manufacture a forging material of the 10-ton class and the temperature at the bolt-joined portion can be lowered to 500°C.

Invention 4 having a rotor diameter of 700 mm, similarly to Comparison 4, can structure a rotor only by bolt joint, though the portion of the forging material A at 600°C or lower is made of the forging material B of ferrite steel, thus the quantity of the Ni group super-alloy can be reduced, and the cost can be decreased.

According to this embodiment, a steam turbine rotor and a steam turbine that are highly reliable can be realized.

## Claims

1. A steam turbine rotor for joining a forged material B having a hollow structure to a forged material A of a Ni group super-alloy by welding, removing weld back waves on an inner surface, smoothing the inner surface, and joining a forging material C and the forging material B with a bolt.

2. The steam turbine rotor according to Claim 1,
wherein a temperature at which a welded portion is exposed when in use is 500°C or higher and a temperature of a bolt joint portion is lower than 500°C.

3. The steam turbine rotor according to Claim 2,
wherein the forging material B is a Ni group super-alloy and the forging material C is CrMo V steel.

4. The steam turbine rotor according to Claim 2,
wherein the forging material B is ferrite steel and the forging material C is CrMo V steel.

5. The steam turbine rotor according to Claim 3,
wherein a shaft portion is not subject to wear resistance weld buildup and wear resistance spray coating.

6. A steam turbine using a steam turbine rotor described in Claim 1.
